## Europäisches Patentamt

## European Patent Office

## Office européen des brevets

(11) Veröffentlichungsnummer: **0 181 441**
**B1**

## (12) EUROPÄISCHE PATENTSCHRIFT

(45) Veröffentlichungstag der Patentschrift:
**25.01.89**

(21) Anmeldenummer: **85110241.8**

(22) Anmeldetag: **16.08.85**

(51) Int. Cl.⁴: **C 08 L 9/00,** C 08 L 13/00,
C 08 J 3/24

(54) Vernetzbare Massen.

(30) Priorität: **05.10.84 DE 3436556**

(43) Veröffentlichungstag der Anmeldung:
**21.05.86 Patentblatt 86/21**

(45) Bekanntmachung des Hinweises auf die Patenterteilung:
**25.01.89 Patentblatt 89/4**

(84) Benannte Vertragsstaaten:
**AT BE CH DE FR GB IT LI NL SE**

(56) Entgegenhaltungen:
**EP-A-0 023 084**
**EP-A-0 049 098**
**US-A-3 462 516**

(73) Patentinhaber: **HÜLS AKTIENGESELLSCHAFT, -
RSP Patente / PB 15 - Postfach 13 20, D-4370
Marl 1 (DE)**

(72) Erfinder: **Gorke, Klaus, Dr., Buchenhöfe 27, D-4270
Dorsten 11 (DE)**
Erfinder: **Streck, Roland, Dr., Leverkusener
Strasse 12, D-4370 Marl (DE)**
Erfinder: **Herrmann, Christoph, Dr.,
Siedlungsstrasse 3, D-4370 Marl (DE)**

**Beschreibung**

Die Erfindung betrifft in der Wärme vernetzbare Massen entsprechend dem Oberbegriff von Patentanspruch 1 und ein Verfahren zur Herstellung von in der Kälte vernetzenden Massen entsprechend dem Oberbegriff von Patentanspruch 3.

Die Massen sind für außerordentlich vielseitige Anwendungen von Interesse, beispielsweise als Fugendichtungsmassen, Klebstoffe, Kitte, Spachtelmassen und Schwingungsdämpfungsmassen.

In der Wärme vernetzbare Massen und in der Kälte vernetzende Massen, welche aus einem primäre und/oder sekundäre Hydroxylgruppen tragenden Polymerisat auf Basis von 1,3-Butadien mit einer zahlenmittleren, relativen Molekülmasse ($\bar{M}n$) von 500 bis 10 000 als Bindemittel, einer wirksamen Menge eines Diisocyanats, wie beispielsweise Toluylendiisocyanat und Diphenylmethandiisocyanat, als Vernetzungsmittel und üblichen Zusatzstoffen bestehen, sind bekannt.

Sie haben den Nachteil, daß das Vernetzungsmittel arbeitshygienisch nicht unbedenklich ist und daher der Umgang mit ihm besondere Vorkehrungen zum Arbeitsschutz erfordert.

Es hat daher nicht an Anstrengungen gefehlt, die Diisocyanate durch arbeitshygienisch unbedenkliche Vernetzungsmittel zu ersetzen.

In der US-PS 3 624 014 wird beispielsweise vorgeschlagen, das Bindemittel durch Zinn-II-octoat-katalysierte Umesterung eines Tetraalkylsilikats zu vernetzen.

Es ist auch schon vorgeschlagen worden, als Bindemittel ein Carboxylendgruppen tragendes Polymerisat, das durch Umsetzung eines Hydroxylendgruppen tragenden Polymerisates auf Basis von 1,3-Butadien mit einem cyclischen Dicarbonsäureanhydrid erhalten ist, und als Vernetzungsmittel ein Diepoxid einzusetzen (DE-PS-2 140 949, DE-OS-2 741 453 und US-PS-3 897 514; siehe auch DE-OS-2 205 209 und DE-PS-2 257 053).

Schließlich sind aus der EP-PS 49 098 in der Wärme vernetzbare Massen und in der Kälte vernetzende Massen bekannt, welche aus einer Kombination von zwei Bindemitteln, einem Vernetzungsmittel, das die beiden Bindemittel zur Vernetzung miteinander befähigt, und üblichen Zusatzstoffen besteht (beispielsweise Bindemittel I = Epoxyharz und Bindemittel II = maleinisiertes Polybutadien).

Auch diese Massen haben einen Nachteil. Dieser besteht darin, daß die zur Vernetzung erforderlichen Zeiten vergleichsweise lang sind.

Die Aufgabe der Erfindung ist es, in der Wärme vernetzbare Massen und ein Verfahren zur Herstellung von in der Kälte vernetzenden Massen bereitzustellen, welche die Nachteile des geschilderten Standes der Technik überwinden.

Die Aufgabe wurde in überraschender Weise wie in den Patentansprüchen 1 und 2 angegeben gelöst:

Masse, bestehend aus einem Bindemittel, einem die Vernetzung katalysierenden Zusatzstoff und gegebenenfalls weiteren, üblichen Zusatzstoffen, mit den folgenden Merkmalen:

a.1 das Bindemittel besteht zu 10 bis 90 Massen-% aus dem Bindemittel I und zu 90 bis 10 Massen-% aus dem Bindemittel II;

a.2 das Bindemittel 1 ist ein primäre oder sekundäre Hydroxylgruppen tragendes Polymerisat mit einer Hydroxylzahl von 10 bis 150 [mg KOH/g] und mit $\bar{M}n = 1\,000$ bis 8 000;

a.3 das Bindemittel II ist ein seitenständige Bernsteinsäureanhydridgruppen tragendes Polymerisat mit einer Säurezahl von 20 bis 250 [mg KOH/g] und mit $\bar{M}n = 1\,000$ bis 8 000;

a.4 den funktionalisierten Polymerisaten gemäß a.2 und a.3 liegen Homopolymerisate des 1,3-Butadiens oder Copolymerisate aus $\geqslant$ 70 Massen-% 1,3-Butadien und $\leqslant$ 30 Massen-% anderen copolymerisierbaren 1,3-(Cyclo)dienen und/oder copolymerisierbaren Alpha-Olefinen zugrunde, welche durch Isomerisierung, Hydrierung oder Cyclisierung modifiziert sein können;

b der die Vernetzung katalysierende Zusatzstoff ist eine organische Stickstoffbase, welche unter den Bedingungen der Vernetzung nicht acryliert wird, aus der Gruppe der sterisch gehinderten, primären und sekundären Amine, der tertiären Amine, wobei Triethylamin ausgeschlossen ist, und der N-Alkylimidazole.

Die oben angegebene Masse kann auch folgendes Merkmal c aufweisen:

das Bindemittel besteht zu 20 bis 80 Massen-% aus dem Bindemittel I und zu 80 bis 20 Massen-% aus dem Bindemittel II.

Das den Massen der Erfindung zugrundeliegende Vernetzungsprinzip besteht in einer additiven Veresterungsreaktion zwischen den primären und/oder sekundären Hydroxylgruppen des Bindemittels I und den Bernsteinsäureanhydridgruppen des Bindemittels II. Dabei werden Bernsteinsäurehalbestergruppen gebildet, welche die den Bindemitteln zugrundeliegenden Makromoleküle miteinander verknüpfen. Die so gebildete Bindemittelmatrix weist freie Carboxylgruppen und gegebenenfalls freie Hydroxylgruppen oder freie Bernsteinsäureanhydridgruppen auf. Diese funktionellen Gruppen und gegebenenfalls auch die funktionellen Gruppen der Bindemittel I und II können mit geeigneten funktionellen Gruppen der Zusatzstoffe und der Substrate, mit denen die Massen in Kontakt kommen, reagieren.

Die Herstellung der Bindemittel I und II ist grundsätzlich bekannt.

**Bindemittel I**

Bamford et al haben den Weg der radikalischen Polymerisation mit 4.4'-Azo-bis-(4-cyanopentanol-1) als Initiator beschrieben (Trans. Farad. Soc. 56 (1960) 932). Die radikalische Polymerisation mit Wasserstoffperoxid als Initiator wird in den DE-OS-2 323 677, US-PSS-3 673 168 und 3 714 110 und GB-PS-957 788 beschrieben. Die anionische Polymerisation mit Di-Lithium-Verbindungen als Initiator und die Umsetzung des di-Lithiumterminierten Polybutadiens mit Ethylenoxid unter Bildung eines di-Hydroxyl-terminierten Polybutadiens wird in den DE-AS-2 406 092, US-PS-3 109 871 und DE-OS-3 042 559 beschrieben. Die Ozonolyse höhermolekularer Kautschuke und die Reduktion der erhaltenen Ozonide unter Bildung von di-Hydroxylterminierten Polybutadienen wird in den JP-PS-9 002 890 und SU-PS-590 314 beschrieben. Die an den Kettenenden substituierten Polybutadiene werden als telechelisch funktionalisierte Polymerisate bezeichnet.

Polymerisate mit statistischer Verteilung der Hydroxylgruppen entlang der Makromolekülängsachse sind ebenfalls bekannt. Die Umsetzung eines Halbesters eines maleinisierten Polybutadiens mit einem Aminoalkohol wird in der EP-OS 87 526 beschrieben. Die Anlagerung von Formaldehyd an ein Polybutadien unter Bildung von Hydroxymethylgruppen wird in der deutschen Patentanmeldung mit dem Aktenzeichen P 33 46 714.5 beschrieben. Diese Hydroxymethylgruppen tragenden Polymerisate sind als Bindemittel I bevorzugt.

**Bindemittel II**

Das Bindemittel II wird in der Regel durch Anlagerung von Maleinsäureanhydrid (MSA) an ein Polymerisat auf Basis von 1,3-Butadien erhalten (siehe beispielsweise DE-AS-2 362 534).

In Spezialfällen kann das Bindemittel II durch Anlagerung von MSA an ein Polymerisat auf Basis von 1,3-Butadien erhalten werden, das bereits andere funktionelle Gruppen, insbesondere reaktive Silylgruppen wie beispielsweise Trimethoxysilylgruppen, aufweist. Derartige Gruppen tragende Polymerisate auf Basis von 1,3-Butadien können gemäß DE-PS-3 028 839 erhalten werden.

Die Bindemittel I und II sind vorzugsweise funktionalisierte Homopolymerisate des 1,3-Butadiens. Sie können auch funktionalisierte Copolymerisate sein, denen $\geqslant$ 70 Massen-% 1,3-Butadien und $\leqslant$ 30 Massen-% andere copolymerisierbare 1,3-(Cyclo)diene, wie beispielsweise Isopren und Cyclopentadien, und/oder copolymerisierbare $\alpha$-Olefine, wie beispielsweise Styrol und Ethylen, zugrundeliegen.

Die funktionalisierten Polymerisate werden in der Regel durch Funktionalisierung der Basispolymerisate erhalten. Diese können in bekannter Weise durch anionische Polymerisation, insbesondere mit lithiumorganischen Katalysatoren, gegebenenfalls in Gegenwart einer Lewis-Base, insbesondere einer Lewis-Base aus der Gruppe der Ether, tertiären Amine und ihrer Gemische, als Cokatalysator, erhalten werden. Sie werden vorzugsweise durch Ziegler-Polymerisation, insbesondere mit einem Nickel-Katalysator, erhalten.

Die Zusatzstoffe, welche die Kaltvernetzung der Bindemittel I und II miteinander katalysieren, sind übliche saure Veresterungskatalysatoren, wie beispielsweise (Alkyl)benzolsulfonsäuren und Paraffinsulfonsäuren, und organische Stickstoffbasen, welche unter den Bedingungen der Vernetzung im wesentlichen nicht acyliert werden. Geeignete Zusatzstoffe sind insbesondere sterisch gehinderte, primäre und sekundäre Amine, tertiäre Amine und N-Alkylimidazole. Massen, welche derartige Zusatzstoffe enthalten, vernetzen bereits bei Raum- oder Umgebungstemperatur. Besonders kurze Vernetzungszeiten werden erzielt, wenn diese Massen erwärmt werden.

Die Vernetzungszeiten hängen von der Reaktivität der Hydroxylgruppen des Bindemittels I (primäre Hydroxylgruppen reaktiver als sekundäre Hydroxylgruppen) von der Reaktionstemperatur, von der Art und Menge des Katalysators und von der Art und Menge anderer Zusatzstoffe ab.

Übliche Zusatzstoffe sind beispielsweise Additive, Extender, Füllstoffe und reaktionsfähige Modifizierungskomponenten.

Die Additive sind beispielsweise Alterungs- und Lichtschutzmittel, Pigmente, in der Masse lösliche Farbstoffe, Haftvermittler, Verdickungsmittel, flammhemmende Zusätze, rauchmindernde Zusätze und in speziellen Fällen die Verbrennung beschleunigende Zusätze. Die Additive können Gruppen aufweisen, die zur Reaktion mit den Anhydridgruppen des Bindemittels II und/oder den Carboxylgruppen der Bindemittelmatrix befähigt sind. Sie werden in die vernetzte Masse eingebunden, so daß Verdampfungs- und Migrationsverluste und Ausblühungen vermieden werden.

Die Extender sind übliche Extenderöle und Weichmacher. Sie dienen zur Herabsetzung der Viskosität der Massen und zu ihrer Verbilligung.

Geeignete Füllstoffe sind beispielsweise Ruß, Talkum, Glimmer, Asbest, Kaolin, sonstige natürliche und synthetische Silikate, Quarzmehl, Sand, gefällte und pyrogene Kieselsäure, Schlackenmehl, Flugasche, Zement, Gips, Bariumsulfat, pulver-, plättchen- oder faserförmige Metalle und ihre Oxide, Carbide, Nitride und Boride, Aluminiumhydroxid, Magnesiumhydroxid, Gummirauhmehl und synthetische Polymere, wie beispielsweise PVC, Polyolefine und Polystyrol, und zwar in Form von Fasern, Pulvern oder im aufgeschäumten (expandierten) Zustand.

Der Verbund der Füllstoffe mit der Bindemittelmatrix kann unter Umständen durch Zusatz üblicher Haftvermittler, beispielsweise solcher aus der Gruppe der organofunktionellen Silane und Titanate, deutlich verbessert werden.

Geeignete Füllstoffe sind ferner Glasfasern, Glasmikrokugeln, Glasmikrohohlkugeln und andere silikatische Füllstoffe. Diese können mit Aminogruppen oder Epoxygruppen tragenden Silanen beschichtet sein, so daß sie zur Reaktion mit den Anhydridgruppen des Bindemittels II und/oder den Carboxylgruppen der Bindemittelmatrix befähigt sind.

Mit Füllstoffen, welche direkt zur Reaktion mit den Anhydridgruppen des Bindemittels II und mit den Carboxylgruppen der Bindemittelmatrix befähigt sind, wie beispielsweise die Oxide, Hydroxide, basischen Carbonate und Carbonate der Erdalkalimetalle und des Zinks und das Oxid und Hydroxid des Aluminiums, können vernetzte Massen mit hoher Zähigkeit und Weiterreißfestigkeit erhalten werden. Kreide ist in diesem Zusammenhang besonders bevorzugt.

Auch organische Füllstoffe, deren Oberfläche primäre und/oder sekundäre Hydroxylgruppen aufweist, wie beispielsweise Stärke, Cellulosefasern, Cellulosepulver, Holzmehl, gemahlene Nußschalen, Reishüllen, Korkmehl, Rindenmehl und dergleichen, sind direkt zur Reaktion mit den Anhydridgruppen des Bindemittels II und mit den Carboxylgruppen der Bindemittelmatrix befähigt. Derartige Füllstoffe werden in die vernetzte Masse eingebunden und können daher wesentlich zur Festigkeit und Elastizität beitragen.

Die reaktionsfähigen Modifizierungskomponenten, die zur Reaktion mit den Anhydridgruppen des Bindemittels II und/oder den Carboxylgruppen der Bindemittelmatrix befähigt sind, sind beispielsweise noch nicht ausgehärtete Epoxyharze, Phenoplaste, Aminoplaste, Ketonharze, welche gegebenenfalls hydriert sind, Copolymere von Maleinsäureanhydrid mit α-Olefinen, Polyethylenglykol, Polypropylenglykol, Polytetramethylenglykol sowie andere auf dem Polyurethangebiet übliche, als Hydroxylkomponente verwendete Stoffe.

Die Funktionalitäten der Bindemittel I und II sind so auszuwählen, daß die Funktionalität des Bindemittels II für die Bildung der Bindemittelmatrix und die Reaktion mit den Füllstoffen, den Additiven und den Modifizierungskomponenten ausreicht. Dazu genügen wenige orientierende Versuche.

Für die Bildung der Bindemittelmatrix ist in der Regel das Verhältnis der Bernsteinsäureanhydridgruppen im Bindemittel II zu den primären und/oder sekundären Hydroxylgruppen im Bindemittel I ca. 1 : 1 und dementsprechend das Verhältnis des Produktes aus der Säurezahl und der Menge des Bindemittels II zum Produkt aus der Hydroxylzahl und der Menge des Bindemittels I ca. 2 : 1.

Die mit den Massen der Erfindung erzielbare Vernetzungsdichte läßt sich durch Variation der Hydroxyl- und Säurezahlen, der Molekülmasse und der Mengenanteile der Bindemittel I und II, bezogen auf die Bindemittelkombination, und gegebenenfalls durch Art und Menge der Zusatzstoffe in weiten Grenzen einstellen, so daß je nach Verwendungszweck harte oder weiche vernetzte Massen mit hoher bzw. niedriger Vernetzungsdichte erhalten werden können.

Außer den eingangs beipielhaft genannten Anwendungen, für welche die Massen der Erfindung von Interesse sind, sind noch folgende Anwendungen zu nennen:

Radiergummis, Abschirmmittel gegen elektromagnetische und nukleare Strahlung, Geräuschdämpfungsmassen, Kabelvergußmassen, Massen zur Herstellung von Dichtungsringen, Festtreibstoffe und Raketentreibstoffe, wobei die einzusetzenden Zusatzstoffe Ammoniumperchlorat sowie weitere, die Verbrennung beeinflussende Stoffe, wie beispielsweise Aluminiumpulver, Ferrocen- und/oder Carboran-Verbindungen, umfassen.

Die Erfindung wird durch die folgenden Beispiele erläutert. Darin bedeuten Teile (T.) Massenteile und Prozent (%) Massenprozent.

$\bar{M}n$ der den Bindemitteln I zugrundeliegenden, funktionalisierten Polymerisate wurde gelpermeationschromatografisch bestimmt. $\bar{M}n$ der den Bindemitteln II zugrundeliegenden Basispolymerisate wurde dampfdruckosmometrisch bestimmt.

Die Viskosität der Bindemittel I und II wurde bei 20°C nach DIN 53 015 bestimmt.

Die Hydroxylzahl (OHZ) des Bindemittels I wurde nach DIN 53 240 und die Säurezahl (SZ) des Bindemittels II nach DIN 53 402 bestimmt.

Der Gelgehalt der vernetzten Massen wurde durch Lösen einer Probe in Toluol bei 20 °C, Abtrennen des ungelösten Anteils durch Filtration und gravimetrische Bestimmung des gelösten Anteils indirekt bestimmt.

Die Shore-Härte A der vernetzten Massen wurde nach DIN 53 505 bestimmt.

Den Bindemitteln II liegen folgende Basispolymerisate zugrunde:

**Tabelle 1**

| | $\bar{M}n$ | 1,4-cis | Mikrostruktur[*] | | |
| | | | 1,4-trans | Vinyl | |
|---|---|---|---|---|---|
| Polybutadien A | ca. 1 700 | ca. 72 % | 27 % | 1 % | |
| Polybutadien B | ca. 2 750 | ca. 80 % | 19 % | 1 % | |

Polybutadien C wie Polybutadien A, da aus diesem durch Umsetzung mit Vinyltrimethoxysilan unter Bildung von Trimethoxysilylgruppen (2,5 % Si, bezogen auf das Umsetzungsprodukt) nach DE-PS-3 028 839 erhalten.

[*] wiederkehrende Einheiten, die durch 1,4-cis-, 1,4-trans-und 1,2-Polymerisation von 1,3-Butadien erhalten sind und durch IR-Analyse bestimmt wurden.

4

## Herstellung der Bindemittel IA bis IF

Die Bindemittel IA bis ID wurden durch Umsetzung von Polybutadienolen mit unterschiedlichem $\bar{M}n$, deren Mikrostruktur derjenigen des Polybutadienöl A der Tabelle 1 entspricht, mit unterschiedlichen Mengen Paraformaldehyd in Gegenwart von 0,5 % 2,2-Methylen-bis-(4-methyl-6-tertiärbutylphenol), bezogen auf das Polybutadienöl, wie in der deutschen Patentanmeldung mit dem Aktenzeichen P 33 46 714.5 beschrieben, erhalten.

Das Bindemittel IE wurde wie in der EP-OS 87 526 beschrieben erhalten.

Das Bindemittel IF ist ein im Handel erhältliches, telechelisch funktionalisiertes Polybutadien.

### Tabelle 2

| Bindemittel | $\bar{M}n$ | OHZ [mg KOH/g] | Viskosität [mPa.s] |
|---|---|---|---|
| IA | 2 240 | 32 | 100 000 |
| IB | 1 750 | 49 | 4 700 |
| IC | 2 790 | 54 | 36 000 |
| ID | 2 850 | 62 | 67 000 |
| IE | - | 137 | - |
| IF | - | 42 | 5 000* |

* bestimmt bei 30°C

## Herstellung der Bindemittel IIA bis IIC

Die Bindemittel IIA bis IIC wurden durch Umsetzung des Polybutadien A bzw. B bzw. C der Tabelle 1 mit 7,5 % MSA in Gegenwart von 0,05 % N-Isopropyl-N-phenyl-p- phenylendiamin, jeweils bezogen auf das Gemisch aus Polybutadien und MSA, (190°C, 2 h) erhalten.

### Tabelle 3

| Bindemittel | SZ [mg KOH/g] | Viskosität [mPas] |
|---|---|---|
| IIA | 70 | 6 300 |
| IIB | 75 | 21 000 |
| IIC | 57 | 35 000 |

## Herstellung von in der Wärme vernetzbaren, füllstofffreien Massen und ihre Vernetzung (Vergleichsbeispiele 1 bis 8)

Jeweils 100 g eines der Bindemittel II wurden mit der in der folgenden Tabelle 4 angegebenen Menge eines der Bindemittel I bei Raumtemperatur gemischt. Die erhaltenen Massen wurden durch zweistündiges Erhitzen auf 100°C vernetzt. Die vernetzten Massen waren schwach gefärbt, klar und blasenfrei.

**Tabelle 4**

| Beispiel | Bindemittel-kombination | Binde-mittel I [g] | $\frac{\text{SZ} \cdot \text{Menge B.II}}{\text{OHZ} \cdot \text{Menge B.I}}$ | Gelgehalt [%] | Shore-Härte A |
|---|---|---|---|---|---|
| 1 | IA-IIA | 117 | 1,9 | 75 | 16 |
| 2 | IB-IIA | 76 | 1,9 | 74 | 15 |
| 3 | IC-IIA | 65 | 2,0 | 79 | 26 |
| 4 | IC-IIA | 130 | 1,0 | 78 | 17 |
| 5 | ID-IIA | 38 | 3,0 | 87 | 24 |
| 6 | ID-IIB | 57 | 2,1 | 82 | 24 |
| 7 | IE-IIB | 27,4 | 2,0 | 76 | 20 |
| 8 | IF-IIB | 81,3 | 2,2 | 90 | 21 |

**Herstellung von in der Kälte vernetzenden, füllstoffreien Massen und ihre Vernetzung (Beispiele 9 bis 12)**

Jeweils 100 g des Bindemittels IIB wurden mit der in der folgenden Tabelle 5 angegebenen Menge eines der Bindemittel I gemischt. Dann wurde 1 % N-Methylimidazol, bezogen auf die Bindemittelkombination, bei Raumtemperatur zugemischt. Im Falle von Beispiel 12 wurden zusätzlich 50 g eines paraffinischen Öls zugemischt. Die gemäß Beispiel 9, 11 und 12 erhaltenen Massen wurden 15 min auf 45°C erhitzt. Die gemäß Beipiel 10 erhaltene Masse vernetzte bei Raumtemperatur während 60 min.

**Tabelle 5**

| Beispiel | Bindemittel-kombination | Binde-mittel I [g] | $\frac{\text{SZ} \cdot \text{Menge B.II}}{\text{OHZ} \cdot \text{Menge B.I}}$ | Gelgehalt [%] | Shorehärte A |
|---|---|---|---|---|---|
| 9 | ID-IIB | 57 | 2,1 | 84 | 27 |
| 10 | IA-IIB | 108 | 2,2 | 82 | 18 |
| 11 | ID-IID | 136 | 0,9 | 68 | 10 |
| 12 | ID-IIB | 57 | 2,1 | 67 | 20 |

**Versuche zur Demonstration der Abhängigkeit Vernetzungszeit der Massen der Erfindung bei der Kaltvernetzung vom Veresterungskatalysator (Beispiele 13 bis 20)**

Das Beispiel 13 ist ein Vergleichsbeispiel für die folgenden Beispiele der Tabelle 6. Die im Versuch eingesetzte Masse enthält keinen Katalysator und entspricht der vernetzbaren Masse des Beispiels 1 der Tabelle 4, d. h. sie wurde durch Mischen von 100 g des Bindemittels IIA mit 117 g des Bindemittels IA bei 20°C erhalten ($\frac{\text{SZ} \cdot \text{Menge B.IIA}}{\text{OHZ} \cdot \text{Menge B.IA}} = 1{,}9$).

Jeweils 100 g des Bindemittels IIA wurden mit einem Gemisch aus 117 g des Bindemittels IA und 2,5 % eines der in der Tabelle 6 angegebenen Katalysatoren, bezogen auf die Bindemittelkombination, bei 20°C gemischt. Abweichend von diesen Bedingungen betrug die Katalysatormenge in den Beispielen 19 und 20 nur 0,5 %.

Die erhaltenen Massen wurden bei 20°C gelagert. Mit der Daumendruckprobe wurde die Lagerzeit bestimmt, nach welcher die vernetzte Masse schon fest, aber an der Oberfläche gerade noch klebrig war.

6

**Tabelle 6**

| Beispiel | Katalysator | Lagerzeit bei 20°C (Daumendruckprobe) | Gelgehalt [%] |
|---|---|---|---|
| 13 | - (Vergleich) | 144 h | 66 |
| 14 | Pyridin (Vergelich) | 72 h | 72 |
| 15 | 3-Amino-2.4-dimethyl-pentan | 90 min | 73 |
| 16 | 1.1.6.6-Tetraisopropyl-2.5-diazahexan | 30 min | 74 |
| 17 | Di-(2-ethylhexyl)-amin | 10 min | 73 |
| 18 | N,N'-Tetramethyl-ethylendiamin | 5 min | 75 |
| 19 | N-Methylimidazol | 30 min | 70 |
| 20 | p-Toluolsulfonsäure (Vergelich) | 90 min | 76 |

**Herstellung von in der Wärme vernetzbaren, füllstoffhaltigen Massen und ihre Vernetzung (Vergleichbeispiele 21 bis 29)**

Jeweils 100 g des Bindemittels IIA und 117 g des Bindemittels IA ($\frac{SZ\text{-Menge B.IIA}}{OHZ\text{-Menge B.IA}}$ = 1,9; vgl. Beispiel 1 der Tabelle 4) wurden im Walzenstuhl mit einem Füllstoff und in einigen Beispielen zusätzlich mit einem weichmachenden Öl, deren Art und Menge in der folgenden Tabelle 7 angegeben sind, gemischt. Die erhaltenen Massen wurden zur Entgasung 24 h bei Raumtemperatur gelagert (die Entgasung kann alternativ im Vakuum in wesentlich kürzerer Zeit durchgeführt werden) und dann durch dreistündiges Erhitzen auf 110°C vernetzt (Beispiele 21 bis 28).

Im Beispiel 29 wurde abweichend von den übrigen Beispielen der Tabelle 7 in der Weise verfahren, daß als Bindemittel II das Bindemittel IIC der Tabelle 3 eingesetzt wurde.

**Tabelle 7**

| Beispiel | Füllstoff | weichmachendes Öl | Shore-Härte A |
|---|---|---|---|
| | | Anteil an der Gesamtmasse [%] | |
| 21 | Talkum | 50 | 36 |
| 22 | gemahlene Kreide | 50 | 32 |
| 23 | gemahlene Kreide | 25 paraffinisches Öl 25 | 9 |
| 24 | Polyethylenpulver | 50 | 42 |
| 25 | CaSO$_4$·0,5 H$_2$O | 50 | 18 |
| 26 | Ruß (N330) | 33 | 65 |
| 27 | Ruß (N330) | 33 aromatisches Öl 33 | 34 |
| 28 | pyrogene Kieselsäure | 18 | 12 |
| 29* | pyrogene Kieselsäure | 18 | 27 |

* Mit der Bindemittelkombination IA-IIC

**Patentansprüche**

1. Masse, bestehend aus einem Bindemittel, einem die Vernetzung katalysierenden Zusatzstoff und gegebenenfalls weiteren, üblichen Zusatzstoffen, mit den folgenden Merkmalen:

a.1 das Bindemittel besteht zu 10 bis 90 Massen-% aus dem Bindemittel I und zu 90 bis 10 Massen-% aus den Bindemittel II;

a.2 das Bindemittel I ist ein primäre oder sekundäre Hydroxylgruppen tragendes Polymerisat mit einer Hydroxylzahl von 10 bis 150 [mg KOH/g] und mit $\bar{M}n$ 1 000 bis 8 000;

a.3 das Bindemittel II ist ein seitenständige Bernsteinsäureanhydridgruppen tragendes Polymerisat mit einer Säurezahl von 20 bis 250 [mg KOH/g] und mit $\bar{M}n$ 1 000 bis 8 000;

a.4 den funktionalisierten Polymerisaten gemäß a.2 und a.3 liegen Homopolymerisate des 1,3-Butadiens oder Copolymerisate aus ≥ 70 Massen-% 1,3-Butadien und ≤ 30 Massen-% anderen copolymerisierbaren 1,3-(Cyclo)dienen und/oder copolymerisierbaren Alpha-Olefinen zugrunde, welche durch Isomerisierung, Hydrierung oder Cyclisierung modifiziert sein können;

b der die Vernetzung katalysierende Zusatzstoff ist eine organische Stickstoffbase, welche unter den Bedingungen der Vernetzung nicht acyliert wird, aus der Gruppe der sterisch gehinderten, primären und sekundären Amine, der tertiären Amine, wobei Triethylamin ausgeschlossen ist, und der N-Alkylimidazole.

2. Masse nach Anspruch 1 mit dem folgenden, zusätzlichen Merkmal:

c das Bindemittel besteht zu 20 bis 80 Massen-% aus dem Bindemittel I und zu 80 bis 20 Massen-% aus dem Bindemittel II.

**Claims**

1. A composition composed of a binder, an additive which catalyses the crosslinking, and optionally further customary additives, and having the following features:

a.1 the binder is composed of 10 to 90 % by weight of the binder I and 90 to 10 % by weight of the binder II;

a.2 the binder I is a polymer carrying primary or secondary hydroxyl groups and having a hydroxyl number of from 10 to 150 [mg of KOH/g] and having $\bar{M}n$ 1,000 to 8,000;

a.3 the binder II is a polymer carrying lateral succinic anhydride groups and having an acid number of from 20 to 250 [mg of KOH/g] and having $\bar{M}n$ 1,000 to 8,000;

a.4 the functionalized polymers in a.2 and a.3 are based on homopolymers of 1,3-butadiene or copolymers composed of $\geqslant$ 70 % by weight of 1,3-butadiene and $\leqslant$ 30 % by weight of other copolymerizable 1,3-(cyclo)dienes and/or copolymerizable alphaolefins, which may be modified by isomerization, hydrogenation or cyclization;

b the additive which catalyses the crosslinking is an organonitrogen base which is not acylated under the crosslinking conditions and is selected from the group comprising the sterically hindered primary and secondary amines, the tertiary amines with the exception of triethylamine, and the N- alkyl imidazoles.

2. A composition according to claim 1 having the following additional feature:

c the binder is composed of 20 to 80 % by weight of the binder I and 80 to 20 % by weight of the binder II.

**Revendications**

1. Masse, constituée par un liant, un additif catalysant la réticulation et éventuellement d'autres adjuvants usuels, avec les caractéristiques suivantes:

a.1 Le liant est constitué pour 10 à 90 % en masse par le liant I et pour 90 à 10 % en masse par le liant II;

a.2 Le liant I est un produit de polymérisation portant des groupes hydroxyle primaires ou secondaires et présentant un indice d'hydroxyle de 10 à 150 mg de KOH par gramme et avec $\bar{M}n$ = 1 000 à 8 000;

a.3 Le liant II est un produit de polymérisation portant des groupes anhydride d'acide succinique latéraux et présentant un indice d'acide de 20 à 250 mg de KOH par gramme et avec $\bar{M}n$ 1 000 à 8 000;

a.4 Des produits d'homopolymérisation du 1,3-butadiène ou des produits de copolymérisation obtenus à partir d'au moins 70 % en masse de 1,3-butadiène et d'au plus 30 % en masse d'autres 1,3-(cyclo)-diènes copolymérisables et/ou d'alpha-oléfines copolymérisables, qui peuvent être modifiés par isomérisation, hydrogénation ou cyclisation, sont à la base des produits de polymérisation rendus fonctionnels, selon a.2 et a.3;

b L'additif catalysant la réticulation est une base organique azotée, qui n'est pas acylée dans les conditions de la réticulation et qui fait partie du groupe des amines primaires et secondaires à empêchement stérique, des amines tertiaires, la triéthylamine étant exclue, et des N-alkyl-imidazoles.

2. Masse selon la revendication 1 avec la caractéristique supplémentaire suivante:

c Le liant est constitué pour 20 à 80 % en masse par le liant I et pour 80 à 20 % en masse par le liant II.